(19) Europäisches Patentamt / European Patent Office / Office européen des brevets

(11) **EP 3 838 966 A1**

(12) **EUROPEAN PATENT APPLICATION**
published in accordance with Art. 153(4) EPC

(43) Date of publication:
**23.06.2021 Bulletin 2021/25**

(21) Application number: **19850574.5**

(22) Date of filing: **24.06.2019**

(51) Int Cl.:
***C08G 61/08*** *(2006.01)* ***C08K 3/04*** *(2006.01)*
***C08K 3/36*** *(2006.01)* ***C08L 65/00*** *(2006.01)*

(86) International application number:
**PCT/JP2019/024915**

(87) International publication number:
**WO 2020/036001 (20.02.2020 Gazette 2020/08)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(30) Priority: **17.08.2018 JP 2018153377**

(71) Applicant: **Zeon Corporation**
**Tokyo 100-8246 (JP)**

(72) Inventors:
- **TSUNOGAE, Yasuo**
  **Tokyo 100-8246 (JP)**
- **OKUNO, Shingo**
  **Tokyo 100-8246 (JP)**

(74) Representative: **Maiwald Patent- und Rechtsanwaltsgesellschaft mbH**
**Elisenhof**
**Elisenstraße 3**
**80335 München (DE)**

(54) **COPOLYMER FORMED BY RING-OPENING COPOLYMERIZATION OF CYCLOOLEFIN, PRODUCTION METHOD THEREFOR, RUBBER COMPOSITION, AND CROSSLINKED RUBBER OBJECT**

(57) A cycloolefin ring-opened copolymer comprising a structural unit derived from a monocyclic olefin and a structural unit derived from a norbornene compound, wherein a difference (ΔTg) between an extrapolated glass transition ending temperature (Teg) and an extrapolated glass transition initiating temperature (Tig) obtained according to JIS K7121 is 30°C or less, and a weight average molecular weight (Mw) is 50,000 to 1,000,000 is provided.

EP 3 838 966 A1

## Description

### TECHNICAL FIELD

The present invention relates to a cycloolefin ring-opened copolymer and a method for producing the same, a rubber composition and a cross-linked rubber comprising the cycloolefin ring-opened copolymer, and more particularly, the present invention relates to a cycloolefin ring-opened copolymer which gives a cross-linked rubber excellent in bending fatigue resistance, abrasion resistance, wet grip property, and low heat build-up property, and a method for producing the same, and a rubber composition and a cross-linked rubber obtained using the cycloolefin ring-opened copolymer.

### BACKGROUND ART

It is known that a cycloolefin ring-opened copolymer composed of a monocyclic olefin and a norbornene compound is used in a rubber having excellent mechanical strength. For example, it is described that, in Patent Document 1, a vulcanized rubber comprising a composition of a copolymer of cyclopentene which is a monocyclic olefin and dicyclopentadiene which is a norbornene compound is excellent in tensile strength. In addition, it is described that, in Patent Document 2, a vulcanized rubber comprising a composition of a copolymer of cyclopentene which is a monocyclic olefin and various norbornene compounds is excellent in low fuel consumption and wet grip property as a rubber for a tire.

However, the vulcanized rubbers comprising the cycloolefin ring-opened copolymers described in Patent Documents 1 and 2 is not sufficient in mechanical strength, low fuel consumption, and wet grip property, and further improvements in these characteristics are required.

### RELATED ART

### PATENT DOCUMENTS

Patent Document 1: JP-A-51-122187
Patent Document 2: WO-A-2014/133028

### SUMMARY OF THE INVENTION

### PROBLEM TO BE SOLVED BY THE INVENTION

In view of such circumstances, it is an object of the present invention to provide a cycloolefin ring-opened copolymer which gives a cross-linked rubber excellent in bending fatigue resistance, abrasion resistance, wet grip property, and low heat build-up property and a method for producing the same, and to provide a rubber composition and a cross-linked rubber obtained using such a cycloolefin ring-opened copolymer.

### MEANS FOR SOLVING THE PROBLEM

In an investigation for achieving the above object, the present inventors first focused on the difference in polymerization reactivity between a monocyclic olefin and a norbornene compound. As a result, it has been found that, due to the difference in the polymerization reactivity of both, the obtained cycloolefin ring-opened copolymer has a wide composition distribution of monomers and a wide molecular weight distribution, and that the glass transition temperature is difficult to control. Although the composition distribution of monomers is difficult to identify directly, it can be substituted by the difference ($\Delta$Tg) between the extrapolated glass transition initiating temperature (Tig) and the extrapolated glass transition ending temperature (Teg) when the glass transition temperature (Tmg) is measured in a differential scanning calorimeter (DSC). That is, the wider the composition distribution of monomers and molecular weight distribution, the greater the $\Delta$Tg. In fact, when performing a measurement using differential scanning calorimetry on the cycloolefin ring-opened copolymer produced in Patent Document 1 and 2, it is difficult to say that $\Delta$Tg is sufficiently small.

As a result of further studies, the present inventors have also found that, when the composition distribution of monomers and molecular weight distribution of the cycloolefin ring-opened copolymer are wide, the performance such as mechanical strength, low fuel consumption, and wet grip property cannot be sufficiently obtained.

Based on the above findings, the present inventors have found that a cross-linked rubber excellent in bending fatigue resistance, abrasion resistance, wet grip property, and low heat build-up property can be obtained by adjusting

the difference (ΔTg) between the extrapolated glass transition initiating temperature (Tig) and the extrapolated glass transition ending temperature (Teg) of the cycloolefin ring-opened copolymer, and the weight average molecular weight (Mw) to an extremely limited range, thereby completing the present invention.

That is, according to the present invention, there is provided a cycloolefin ring-opened copolymer comprising a structural unit derived from a monocyclic olefin and a structural unit derived from a norbornene compound, wherein a difference (ΔTg) between an extrapolated glass transition ending temperature (Teg) and an extrapolated glass transition initiating temperature (Tig) obtained according to JIS K7121 is 30°C or less, and a weight average molecular weight (Mw) is 50,000 to 1,000,000.

In the cycloolefin ring-opened copolymer according to the present invention, it is preferable that a content ratio of the structural unit derived from the monocyclic olefin is 20 to 90% by mass, and a content ratio of the structural unit derived from the norbornene compound is 10 to 80% by mass with respect to all repeating structural units in the cycloolefin ring-opened copolymer.

In the cycloolefin ring-opened copolymer according to the present invention, it is preferable that a glass transition temperature (Tmg) determined according to JIS K7121 is -80°C to 10°C.

In the cycloolefin ring-opened copolymer according to the present invention, it is preferable that the norbornene compound is 2-norbornene.

The present invention also provides a rubber composition comprising the above cycloolefin ring-opened copolymer, and silica and/or carbon black.

The present invention further provides a cross-linked rubber obtained by cross-linking the above rubber composition.

In addition, according to the present invention, there is provided a method for production of the above cycloolefin ring-opened copolymer, comprising copolymerizing the monocyclic olefin and the norbornene compound while adding one or both of the monocyclic olefin and norbornene compound, and a ring-opening polymerization catalyst to a polymerization reactor continuously or intermittently.

## EFFECTS OF INVENTION

According to the present invention, it is possible to provide a cycloolefin ring-opened copolymer which gives a cross-linked rubber excellent in bending fatigue resistance, abrasion resistance, wet grip property, and low heat build-up property, and a method for producing the same, and to provide a rubber composition and a cross-linked rubber containing such a cycloolefin ring-opened copolymer.

## BRIEF DESCRIPTION OF THE DRAWINGS

Fig. 1 is a DSC curve of the cyclopentene/dicyclopentadiene ring-opened copolymer obtained in Example 1.

## DESCRIPTION OF EMBODIMENTS

### <Cycloolefin ring-opened copolymer>

A cycloolefin ring-opened copolymer according to the present invention includes a structural unit derived from a monocyclic olefin and a structural unit derived from a norbornene compound.

As the monocyclic olefin in the present invention, there is no particular limitation as long as it is an olefin having only one cyclic structure, and examples thereof include cyclic monoolefins such as cyclopropene, cyclobutene, cyclopentene, methylcyclopentene, cyclohexene, methylcyclohexene, cycloheptene, and cyclooctene; cyclic diolefins such as cyclohexadiene, methylcyclohexadiene, cyclooctadiene, and methylcyclooctadiene; and the like.

As the monocyclic olefin, one kind may be used alone or two or more kinds may be used in combination. As the monocyclic olefin, cyclopentene, cyclohexene, cycloheptene, cyclooctene and cyclooctadiene are preferred, and cyclopentene and cyclooctadiene are more preferred from the viewpoint that the effect according to the present invention is more easily obtained.

The norbornene compound in the present invention is a compound having a norbornene ring structure, and is preferably a norbornene compound represented by the following general formula (1).

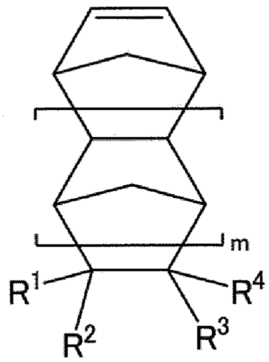

(1)

In the formula, $R^1$ to $R^4$ are each a hydrogen atom, a hydrocarbon group having 1 to 20 carbon atoms, or a substituent containing a halogen atom, a silicon atom, an oxygen atom or a nitrogen atom, and $R^2$ and $R^3$ may be bonded to each other to form a ring, and "m" is an integer of 0 to 2.

Specific examples of the norbornene compound represented by the above general formula (1) include, for example, the following compounds.

bicyclo[2.2.1]hept-2-enes having no substituents or having a hydrocarbon substituent, such as 2-norbornene, 5-methyl-2-norbornene, 5-ethyl-2-norbornene, 5-butyl-2-norbornene, 5-hexyl-2-norbornene, 5-decyl-2-norbornene, 5-cyclohexyl-2-norbornene, 5-cyclopentyl-2-norbornene, 5-ethylidene-2-norbornene, 5-vinyl-2-norbornene, 5-propenyl-2-norbornene, 5-cyclohexenyl-2-norbornene, 5-cyclopentenyl-2-norbornene, 5-phenyl-2-nor bornene, tetracyclo [9.2.1.$0^{2,10}$. $0^{3,8}$] tetradeca-3, 5, 7, 12-tetraene (also referred to as 1,4-methano-1,4,4a,9a-tetrahydro-9H-fluorene), tetracyclo [10.2.1.$0^{2,11}$.$0^{4,9}$]pentadeca-4,6,8,13-tetraene (also referred to as 1,4-methano-1,4,4a,9,9a,10-hexahydroanthracene), dicyclopentadiene, methyl dicyclopentadiene, dihydrodicyclopentadiene (tricyclo[5.2.1.$0^{2,6}$]dec-8-en e) ;

tetracyclo[6.2.1.$1^{3,6}$.$0^{2,7}$] dodec-4-enes having no substituents or having a hydrocarbon substituent, such as tetracyclo [6.2.1.$1^{3,6}$.$0^{2,7}$] dodec-4-ene, 9-methyl tetracyclo [6.2.1.$1^{3,6}$.$0^{2,7}$]dodec-4-ene, 9-ethyltetracyclo [6.2.1.$1^{3,6}$.$0^{2,7}$]dodec-4-ene, 9-cyclohexyltetracyclo [6.2.1.$1^{3,6}$.$0^{2,7}$]dodec-4-ene, 9-cyclopentyltetracyclo [6.2.1.$1^{3,6}$.$0^{2,7}$]dodec-4-ene, 9-methylenetetracyclo [6.2.1.$1^{3,6}$.$0^{2,7}$]dodec-4-ene, 9-ethylidenetetracyclo [6.2.1.$1^{3,6}$.$0^{2,7}$]dodec-4-ene, 9-vinyltetracyclo [6.2.1.$1^{3,6}$.$0^{2,7}$]dodec-4-ene, 9-propenyltetracyclo [6.2.1.$1^{3,6}$.$0^{2,7}$]dodec-4-ene, 9-cyclohexenyltetracyclo [6.2.1.$1^{3,6}$.$0^{2,7}$]dodec-4-ene, 9-cyclopentenyltetracyclo [6.2.1.$1^{3,6}$.$0^{2,7}$]dodec-4-ene, and 9-phenyltetracyclo [6.2.1.$1^{3,6}$.$0^{2,7}$]dodec-4-ene;

bicyclo[2.2.1]hept-2-enes having an alkoxycarbonyl group, such as methyl 5-norbornene-2-carboxylate, ethyl 5-norbornene-2-carboxylate, methyl 2-methyl-5-norbornene-2-carboxylate, and ethyl 2-methyl-5-norbornene-2-carboxylate;

tetracyclo [6.2.1.$1^{3,6}$.$0^{2,7}$]dodec-4-enes having an alkoxycarbonyl group, such as methyl tetracyclo[6.2.1.$1^{3,6}$.$0^{2,7}$] dodec-9-ene-4-carboxylate, and methyl 4-methyltetracyclo [6.2.1.$1^{3,6}$.$0^{2,7}$]dodec-9-ene-4-carboxylate;

bicyclo[2.2.1]hept-2-enes having a hydroxycarbonyl group or acid anhydride group, such as 5-norbornene-2-carboxylic acid, 5-norbornene-2,3-dicarboxylic acid, and 5-norbornene-2,3-dicarboxylic acid anhydride;

tetracyclo[6.2.1.$1^{3,6}$.$0^{2,7}$]dodec-4-enes having a hydroxycarbonyl group or acid anhydride group, such as tetracyclo [6.2.1.$1^{3,6}$.$0^{2,7}$]dodec-9-ene-4-carboxylic acid, tetracyclo [6.2.1.$1^{3,6}$.$0^{2,7}$]dodec-9-ene-4, 5-dicarboxylic acid, and tetracyclo [6.2.1.$1^{3,6}$.$0^{2,7}$]dodec-9-ene-4, 5-dicarboxylic acid anhydride;

bicyclo[2.2.1]hept-2-enes having a hydroxyl group, such as 5-hydroxy-2-norbornene, 5-hydroxymethyl-2-norbornene, 5,6-di(hydroxymethyl)-2-norbornene, 5,5-di(hydroxymethyl)-2-norbornene, 5-(2-hydroxyethoxycarbonyl)-2-norbornene, and 5-methyl-5-(2-hydroxyethoxycarbonyl)-2-norbornene;

tetracyclo [6.2.1.$1^{3,6}$.$0^{2,7}$]dodec-4-enes having a hydroxyl group, such as tetracyclo [6.2.1.$1^{3,6}$.$0^{2,7}$]dodec-9-ene-4-methanol, and tetracyclo [6.2.1.$1^{3,6}$.$0^{2,7}$]dodec-9-ene-4-ol;

bicyclo[2.2.1]hept-2-enes having a hydrocarbonyl group, such as 5-norbornene-2-carbaldehyde;

tetracyclo[6.2.1.$1^{3,6}$.$0^{2,7}$]dodec-4-enes having a hydrocarbonyl group, such as tetracyclo [6.2.1.$1^{3,6}$.$0^{2,7}$]dodec-9-ene-4-carbaldehyde;

bicyclo[2.2.1]hept-2-enes having an alkoxycarbonyl group and a hydroxycarbonyl group, such as 3-methoxycarbonyl-5-norbornene-2-carboxylic acid;

bicyclo[2.2.1]hept-2-enes having a carbonyloxy group, such as 5-norbornene-2-yl acetate, 2-methyl-5-norbornene-2-yl acetate, 5-norbornene-2-yl acrylate, and 5-norbornene-2-yl methacrylate;

tetracyclo [6.2.1.$1^{3,6}$.$0^{2,7}$]dodec-4-enes having a carbonyloxy group, such as 9-tetracyclo[6.2.1.$1^{3,6}$.$0^{2,7}$]dodec-4-enyl acetate, 9-tetracyclo[6.2.1.$1^{3,6}$.$0^{2,7}$]dodec-4-enyl acetate, and 9-tetracyclo [6.2.1.$1^{3,6}$.$0^{2,7}$]dodec-4-enyl methacrylate;

bicyclo[2.2.1]hept-2-enes having a nitrogen-containing functional group, such as 5-norbornene-2-carbonitrile, 5-norbornene-2-carboxyamide and 5-norbornene-2,3-dicarboxic acid imide;

tetracyclo[$6.2.1.1^{3,6}.0^{2,7}$]dodec-4-enes having a nitrogen-containing functional group, such as tetracyclo [$6.2.1.1^{3,6}.0^{2,7}$]dodec-9-ene-4-carbonitrile, tetracyclo [$6.2.1.1^{3,6}.0^{2,7}$]dodec-9-ene-4-carboxyamide, and tetracyclo [$6.2.1.1^{3,6}.0^{2,7}$]dodec-9-ene-4-dicarboxic acid imide;

bicyclo[2.2.1]hept-2-enes having a halogen atom, such as 5-chloro-2-norbornene;

tetracyclo [$6.2.1.1^{3,6}.0^{2,7}$]dodec-4-enes having a halogen atom, such as 9-chlorotetracyclo [$6.2.1.1^{3,6}.0^{2,7}$]dodec-4-ene;

bicyclo[2.2.1]hept-2-enes having a silicon atom-containing functional group, such as 5-trimethoxysilyl-2-norbornene and 5-triethoxysilyl-2-norbornene;

tetracyclo [$6.2.1.1^{3,6}.0^{2,7}$]dodec-4-enes having a silicon atom-containing functional group, such as 4-trimethoxysilyltetracyclo [$6.2.1.1^{3,6}.0^{2,7}$]dodec-9-ene, and 4-triethoxysilyltetracyclo [$6.2.1.1^{3,6}.0^{2,7}$]dodec-9-ene.

As the above norbornene compounds represented by general formula (1), compounds where "m" in general formula (1) is 0 or 1 are preferred, and compounds where "m" in general formula (1) is 0 are more preferred. In general formula (1), $R^1$ to $R^4$ may be the same or different.

Further, among the norbornene compounds represented by the above general formula (1), from the viewpoint that the obtained cross-linked rubber can be made more excellent in bending fatigue resistance, abrasion resistance, wet grip property, and low heat build-up property, $R^1$ to $R^4$ in the above general formula (1) are preferably a hydrogen atom, a chain hydrocarbon group having 1 to 20 carbon atoms, or a substituent containing a halogen atom, a silicon atom, an oxygen atom or a nitrogen atom. In this case, $R^1$ to $R^4$ may be any group which is not bonded to each other and does not form a ring, and are not particularly limited, and may be the same or different, and as $R^1$ to $R^4$, a hydrogen atom or an alkyl group having 1 to 3 carbon atoms is preferred. Also in this case, compounds represented by the general formula in which "m" is 0 or 1 are preferred, and compounds represented by the general formula in which "m" is 0 are more preferred.

As a norbornene compound in which $R^1$ to $R^4$ in the above general formula (1) are a hydrogen atom, a chain hydrocarbon group having 1 to 20 carbon atoms, or a substituent containing a halogen atom, a silicon atom, an oxygen atom or a nitrogen atom, bicyclo[2.2.1]hept-2-enes having no substituents or having a hydrocarbon substituent and tetracyclo[$6.2.1.1^{3,6}.0^{2,7}$]dodec-4-enes having no substituents or having a hydrocarbon substituent, and among them, 2-norbornene, 5-methyl-2-norbornene, 5-ethyl-2-norbornene, 5-ethylidene-2-norbornene and tetracyclo[$6.2.1.1^{3,6}.0^{2,7}$] dodec-4-ene are more preferred, and, from the viewpoint of more easily obtaining the effects according to the present invention, 2-norbornene, 5-methyl-2-norbornene and tetracyclo[$6.2.1.1^{3,6}.0^{2,7}$]dodec-4-ene are furthermore preferred, 2-norbornene and tetracyclo[$6.2.1.1^{3,6}.0^{2,7}$]dodec-4-ene are particularly preferred.

Further, as the norbornene compound represented by the above general formula (1), in the case of using a compound in which $R^2$ and $R^3$ are bonded to each other to form a ring, specific examples of the ring structure, cyclopentane ring, cyclopentene ring, cyclohexane ring, cyclohexene ring, benzene ring and the like are preferably mentioned, these may form a polycyclic structure, further, these may have a substituent. Among these, a cyclopentane ring, a cyclopentene ring, and a benzene ring are preferred, and in particular, a compound having a cyclopentene ring alone or a compound having a polycyclic structure of a cyclopentane ring and a benzene ring is preferred. Note that $R^1$ and $R^4$ other than $R^2$ and $R^3$ forming a ring structure may be the same or different, and $R^1$ and $R^4$ are preferably each a hydrogen atom or an alkyl group having 1 to 3 carbon atoms. In addition, in this case, compounds represented by the general formula in which "m" is 0 are preferred.

As a compound in which $R^2$ and $R^3$ are bonded to each other to form a ring, bicyclo[2.2.1]hept-2-enes having no substituents or having a hydrocarbon substituent is preferred, and among them, dicyclopentadiene, methyldicyclopentadiene, dihydrodicyclopentadiene, 1,4-methano-1,4,4a,9a-tetrahydro-9H-fluorene, and 1,4-methano-1,4,4a,9,9a,10-hexahydroanthracene are preferred, and dicyclopentadiene, 1,4-methano-1,4,4a,9a-tetrahydro-9H-fluorene are more preferred.

In the present invention, as the norbornene compound, one kind may be used alone or two or more kinds may be used in combination.

In the cycloolefin ring-opened copolymer according to the present invention, the content ratio of the structural unit derived from the monocyclic olefin is preferably 20 to 90% by mass, more preferably 30 to 80% by mass, still more preferably 35 to 75% by mass, and particularly preferably 35 to 60% by mass, based on the total repeating structural units. By setting the content ratio of the structural unit derived from the monocyclic olefin within the above range, the obtained cross-linked rubber can be made more excellent in bending fatigue resistance, abrasion resistance, wet grip property, and low heat build-up property.

In the cycloolefin ring-opened copolymer according to the present invention, the content ratio of the structural unit derived from the norbornene compound is preferably 10 to 80% by mass, more preferably 20 to 70% by mass, still

more preferably 25 to 65% by mass, and particularly preferably 40 to 65% by mass, based on the total repeating structural units. By setting the content ratio of the structural unit derived from the norbornene compound within the above range, the obtained cross-linked rubber can be made more excellent in bending fatigue resistance, abrasion resistance, wet grip property, and low heat build-up property.

The cycloolefin ring-opened copolymer according to the present invention may be a copolymer obtained by copolymerization of the monocyclic olefin and the norbornene compound with additional monomers copolymerizable with these compounds. Examples of such additional monomers include polycyclic cycloolefins having an aromatic ring, and the like. Examples of the polycyclic cycloolefins having an aromatic ring include phenylcyclooctene, 5-phenyl-1,5-cyclooctadiene, phenylcyclopentene, and the like. In the cycloolefin ring-opened copolymer according to the present invention, the proportion of structural units derived from the additional monomers to the total repeating structural units is preferably 40% by mass or less, more preferably 30% by mass or less. As the cycloolefin ring-opened copolymer according to the present invention, it is particularly preferable that the copolymer be substantially free from structural units derived from the additional monomers.

The weight average molecular weight (Mw) of the cycloolefin ring-opened copolymer according to the present invention is preferably 50,000 to 1,000,000, more preferably 60,000 to 800,000, still more preferably 70,000 to 700,000, particularly preferably 80,000 to 600,000 as measured against polystyrene standards by gel permeation chromatography. By setting the weight average molecular weight (Mw) in the above range, it is possible to further improve the bending fatigue resistance, abrasion resistance, wet grip property, and low heat build-up property of the obtained cross-linked rubber while maintaining good productivity and handling. The ratio (Mw/Mn) between the weight average molecular weight (Mw) and the number average molecular weight (Mn) of the cycloolefin ring-opened copolymer according to the present invention measured against polystyrene standards by gel permeation chromatography is preferably 1.0 to 5.0, more preferably 1.5 to 2.9, still more preferably 1.5 to 2.5, and particularly preferably 1.5 to 2.3.

The cycloolefin ring-opened copolymer according to the present invention has a cis/trans ratio of preferably 0/100 to 60/40, more preferably 5/95 to 55/45, still more preferably 10/90 to 50/50, and particularly preferably 15/85 to 39/61. The cis/trans ratio refers to the ratio of the cis structure to the trans structure (ratio of cis/trans) in the repeating units constituting the cycloolefin ring-opened copolymer according to the present invention. When the cis/trans ratio is controlled within the above ranges, it is possible to make the obtained cross-linked rubber more excellent in bending fatigue resistance, abrasion resistance, wet grip property, and low heat build-up property.

In the cycloolefin ring-opened copolymer according to the present invention, a difference (ΔTg) between an extrapolated glass transition ending temperature (Teg) and an extrapolated glass transition initiating temperature (Tig) is 30°C or less, the extrapolated glass transition ending temperature (Teg) and the extrapolated glass transition initiating temperature (Tig) being obtained using DSC curves measured at a temperature rising rate of 10 °C/minute and every 0.13°C by using differential scanning calorimetry (DSC) according to JIS K7121. The difference (ΔTg) is preferably 20°C or less, more preferably 15°C or less, and still more preferably 10°C or less. By setting ΔTg within the above range, it is possible to make the obtained cross-linked rubber more excellent in bending fatigue resistance, abrasion resistance, wet grip property, and low heat build-up property.

The cycloolefin ring-opened copolymer according to the present invention has a glass transition temperature (Tmg) of preferably -80 to 10°C, more preferably -75 to 0°C, and still more preferably -70 to -10°C. By setting the glass transition temperature (Tmg) within the above range, it is possible to make the obtained cross-linked rubber more excellent in bending fatigue resistance, abrasion resistance, wet grip property, and low heat build-up property.

The extrapolated glass transition initiating temperature (Tig), the extrapolated glass transition ending temperature (Teg) and the glass transition temperature (Tmg) are determined according to JIS K7121. The difference (ΔTg) between the extrapolated glass transition initiating temperature (Tig) and the extrapolated glass transition ending temperature (Teg) is calculated by the following formula.

$$\Delta Tg = Teg - Tig$$

The extrapolated glass transition initiating temperature (Tig), the extrapolated glass transition ending temperature (Teg), and the glass transition temperature (Tmg) can be controlled, for example, by devising or controlling, as described later, a method of adding a monocyclic olefin and a norbornene compound used for polymerization, a method of adding a ring-opening polymerization catalyst, and the like.

The Mooney viscosity (ML1+4, 100°C) of the cycloolefin ring-opened copolymer according to the present invention is preferably 20 to 150, more preferably 22 to 120, and still more preferably 25 to 90. By setting the Mooney viscosity within the above range, kneading at ordinary temperature and high temperature can be facilitated, and thus workability can be improved.

<Method for production of cycloolefin ring-opened copolymer>

As described above, it is considered that the cycloolefin ring-opened copolymer according to the present invention is a copolymer being very small in the difference (ΔTg) between the extrapolated glass transition ending temperature (Teg) and the extrapolated glass transition initiating temperature (Tig), and therefore, having a relatively narrow monomer composition distribution and a relatively narrow molecular weight distribution.

As a result of extensive studies by the present inventors, it has been found that a cycloolefin ring-opened copolymer having such characteristics can be produced by devising or controlling, when a monocyclic olefin and a norbornene compound are polymerized, a method of adding these monomers, a method of adding a ring-opening polymerization catalyst used for polymerization, and the like.

In other words, the cycloolefin ring-opened copolymer according to the present invention can be suitably produced by a production method comprising a step of copolymerizing the monocyclic olefin and the norbornene compound while adding one or both of the monocyclic olefin and norbornene compound, and a ring-opening polymerization catalyst to a polymerization reactor continuously or intermittently

In the method for production of the cycloolefin ring-opened copolymer according to the present invention, the time for continuously adding the monocyclic olefin and the norbornene compound to the polymerization reactor is usually 15 minutes or more, and the upper limit thereof is not particularly limited, and may be continuously added until the polymerization reaction is completed, and may be, for example, 15 minutes or more and 3 hours or less, and may be 30 minutes or more and 2 hours or less.

In the method for production of the cycloolefin ring-opened copolymer according to the present invention, the number of times of intermittently adding the ring-opening polymerization catalyst to the polymerization reactor is usually two or more, and may be any times as long as the polymerization reaction is performed, but may be two or more and five or less.

The method of adding the monocyclic olefin and the norbornene compound to the polymerization reactor is not particularly limited, and for example, the monocyclic olefin and the norbornene compound may be separately added to the polymerization reactor, or a monomer mixture may be prepared by mixing both of them in advance, and then added to the polymerization reactor. When each is added separately, the monocyclic olefin and the norbornene compound are mixed in the polymerization reactor to form the monomer mixture, and a copolymerization reaction proceeds.

The above method of production may include a step of preparing the monomer mixture containing the monocyclic olefin and the norbornene compound. By preparing the monomer mixture in advance, it is possible to smoothly proceed the copolymerization reaction and to easily produce the cycloolefin ring-opened copolymer small in the difference (ΔTg).

Further, it is preferable that the above method of production includes a step of preparing a solution containing the ring-opening polymerization catalyst. By preparing the solution containing the ring-opening polymerization catalyst in advance, it is possible to smoothly proceed the copolymerization reaction and to easily produce the cycloolefin ring-opened copolymer small in the difference (ΔTg). The above solution can be prepared, for example, by dissolving the ring-opening polymerization catalyst in a part of a solvent used for polymerization.

The above method of production usually includes an initiation step of initiating a copolymerization reaction by adding the monocyclic olefin and the norbornene compound to the polymerization reactor and then adding the ring-opening polymerization catalyst. After the initiation step, the copolymerization reaction of the monocyclic olefin and the norbornene compound continues in the presence of the ring-opening polymerization catalyst.

In the above method of production, even after the initiation step, there is one of the features in which the monocyclic olefin and norbornene compound or the ring-opening polymerization catalyst are added to the polymerization reactor continuously or intermittently. As the monocyclic olefin and the norbornene compound to be added after the initiation step, the monomer mixture which is prepared in advance may be used. As the ring-opening polymerization catalyst to be added after the initiation step, the solution containing the ring-opening polymerization catalyst which is prepared in advance may be used. In addition, either one of the monocyclic olefin and norbornene compound, and the ring-opening polymerization catalyst may be added, or both of the monocyclic olefin and norbornene compound, and the ring-opening polymerization catalyst may be added.

When both of the monocyclic olefin and norbornene compound, and the ring-opening polymerization catalyst are added, both of them may be added simultaneously or may be added at different timing. In addition, when both of the monocyclic olefin and norbornene compound, and the ring-opening polymerization catalyst are added, it is preferable to separate both of them and to add them from a separate inlet port because the copolymerization reaction can be smoothly advanced and the cycloolefin ring-opened copolymer small in the difference (ΔTg) can be easily produced. If both of the monocyclic olefin and norbornene compound, and the ring-opening polymerization catalyst are mixed in advance before being added to the polymerization reactor, it may be difficult to obtain the cycloolefin ring-opened copolymer small in the difference (ΔTg).

In the above method of production, it is necessary to add the monocyclic olefin and the norbornene compound, or the ring-opening polymerization catalyst, over a desired time by addition of them in multiple portions times or by

continuing the addition of them after the initiation step. The end of the addition of the monocyclic olefin and norbornene compound, or the ring-opening polymerization catalyst, and the termination of the copolymerization reaction may be simultaneous or the copolymerization reaction may be continued after the completion of the addition of them. The duration of the addition of the monocyclic olefin and the norbornene compound, and the ring-opening polymerization catalyst, may be based on, for example, the conversion of the monomer and the temperature of the polymerization reaction system. In addition, the ratio of the monocyclic olefin and norbornene compound, and the ring-opening polymerization catalyst to be added after the initiation step to the total amount added can be set on the basis of the conversion ratio of the monomer.

Further, while continuously or intermittently adding a molecular weight adjusting agent to the polymerization reactor in addition to either one or both of the monocyclic olefin and norbornene compound, and the ring-opening polymerization catalyst, the monocyclic olefin and the norbornene compound may be copolymerized. Continuous or intermittent addition of the molecular weight adjusting agent may facilitate the production of the cycloolefin ring-opened copolymer small in the differences (ΔTg). The molecular weight adjusting agent may be added in advance to the monomer mixture described above.

In the method of production of the cycloolefin ring-opened copolymer according to the present invention, the proportion of the amount of the monocyclic olefin to be used is preferably 20 to 90% by mass, more preferably 30 to 85% by mass, still more preferably 35 to 80% by mass, and particularly preferably 35 to 70% by mass, based on the total of the amount of the monocyclic olefin and the norbornene compound to be used. By setting the ratio of the amount of the monocyclic olefin to be used within the above range, it is possible to further easily produce the cycloolefin ring-opened copolymer which gives the cross-linked rubber excellent in bending fatigue resistance, abrasion resistance, wet grip property, and low heat build-up property. Further, by setting the ratio of the amount of the monocyclic olefin to be used in the above range, the cycloolefin ring-opened copolymer small in the difference (ΔTg) can be more easily produced.

In the method of production of the cycloolefin ring-opened copolymer according to the present invention, the ratio of the amount of the norbornene compound to be used is preferably 10 to 80% by mass, more preferably 15 to 70% by mass, still more preferably 20 to 65% by mass, and particularly preferably 30 to 65% by mass, based on the total amount of the cyclic olefin and the norbornene compound to be used. By setting the ratio of the amount of the norbornene compound to be used within the above range, it is possible to further easily produce the cycloolefin ring-opened copolymer which gives the cross-linked rubber excellent in bending fatigue resistance, abrasion resistance, wet grip property, and low heat build-up property. Further, by setting the ratio of the amount of the norbornene compound to be used in the above range, the cycloolefin ring-opened copolymer small in the difference (ΔTg) can be more easily produced.

The ring-opening polymerization catalyst used for the ring-opening polymerization is not particularly limited, and is not particularly limited as long as it is capable of ring-opening polymerization of the monocyclic olefin and the norbornene compound, but a catalyst containing a halogenated metal compound is preferably used. As those containing such a halogenated metal compound, for example, a Group VI transition metal compound in the periodic table containing a halogen atom, a ruthenium carbene complex containing a halogen atom, or the like can be suitably used.

The Group VI transition metal compound which can be used in the present invention is a compound having a Group VI transition metal atom in the periodic table (long period type periodic table, same as below), specifically, a compound having a chromium atom, a molybdenum atom, or a tungsten atom, and a compound having a molybdenum atom or a tungsten atom is preferred, and in particular, a compound having a tungsten atom is more preferred from the viewpoint of high solubility to the monocyclic olefin.

Specific examples of such a Group VI transition metal compound containing a halogen atom (hereinafter referred to as "Group VI transition metal compound" as appropriate) include molybdenum compounds such as molybdenum pentachloride, molybdenum oxotetrachloride, molybdenum (phenylimide)tetrachloride; tungsten compounds such as tungsten hexachloride, tungsten oxotetrachloride, tungsten (phenylimide)tetrachloride, monocatecholate tungsten tetrachloride, bis(3,5-di-tert-butyl)catecholate tungsten dichloride, bis(2-chloroetherate)tetrachloride; and the like.

The amount of the Group VI transition metal compound in the Periodic Table to be used is preferably in the range of 1:100 to 1:200,000, more preferably 1:200 to 1:150,000, and still more preferably 1:500 to 1:100,000, in the molar ratio of "Group VI transition metal atom in the ring-opening polymerization catalyst : monomer used for ring-opening polymerization". If the amount of the Group VI transition metal compound to be used is too small, the polymerization reaction may not proceed sufficiently. On the other hand, if the amount is too large, it is difficult to remove the catalyst residue from the obtained cycloolefin ring-opened copolymer, and various characteristics of the obtained cross-linked rubber become inferior.

In addition, when a Group VI transition metal compound in the Periodic Table is used as the ring-opening polymerization catalyst, the Group VI transition metal compound in the Periodic Table is preferably used in combination with an organoaluminum compound represented by the following general formula (2). The organoaluminum compound acts as a ring-opening polymerization catalyst together with the Group VI transition metal compound in the Periodic Table.

$$(R^5)_{3-x}Al(OR^6)_x \qquad (2)$$

In the above general formula (2), $R^5$ and $R^6$ are each a hydrocarbon group having 1 to 20 carbon atoms, preferably a hydrocarbon group having 1 to 10 carbon atoms. Further, "x" is $0<x<3$.

Specific examples of $R^5$ and $R^6$ include alkyl groups such as methyl group, ethyl group, isopropyl group, n-propyl group, isobutyl group, n-butyl group, t-butyl group, n-hexyl group, cyclohexyl group, n-octyl group, and n-decyl group; aryl groups such as phenyl group, 4-methylphenyl group, 2,6-dimethylphenyl group, 2,6-diisopropylphenyl group, and naphthyl group; and the like.

In addition, in the above general formula (2), "x" is $0<x<3$. That is, in the general formula (2), the compositional ratio of $R^5$ and $R^6$ can take any values in the ranges of $0<3-x<3$ and $0<x<3$, respectively, but "x" is preferably $0.5<x<1.5$ from the viewpoint that the polymerization activity can be increased.

The organoaluminum compound represented by the above general formula (2) can be synthesized by, for example, a reaction of trialkylaluminum and an alcohol as shown in the following general formula (3) .

$$(R^5)_3Al + xR^6OH \rightarrow (R^5)_{3-x}Al(OR^6)_x + (R^6)_xH \qquad (3)$$

It is to be noted that "x" in the above general formula (2) can be arbitrarily controlled by defining a reaction ratio of the corresponding trialkylaluminum and alcohol as shown in the above general formula (3).

The amount of the organoaluminum compound to be used also varies depending on the type of the organoaluminum compound to be used, but is preferably 0.1 to 100 times molar, more preferably 0.2 to 50 times molar, and still more preferably 0.5 to 20 times molar, with respect to the Group VI transition metal atom in the Periodic Table constituting the Group VI transition metal compound in the Periodic Table. If the amount of the organoaluminum compound to be used is too small, the polymerization activity may be insufficient, and if the amount is too large, a side reaction tends to occur easily at the time of ring-opening polymerization.

Specific examples of the ruthenium carbene complex containing a halogen atom (hereinafter referred to as a "ruthenium carbene complex" as appropriate) which can be used in the present invention include bis(tricyclohexylphosphine)benzylidene ruthenium dichloride, bis(triphenylphosphine)-3,3-diphenylpropenylidene ruthenium dichloride, bis(tricyclohexylphosphine)t-butylvinylidene ruthenium dichloride, dichloro-(3-phenyl-1H-inden-1-ylidene)bis(tricyclohexylphosphine) ruthenium, bis(1,3-diisopropylimidazolin-2-ylidene)benzylidene ruthenium dichloride, bis(1,3-dicyclohexylimidazolin-2-ylidene)benzylidene ruthenium dichloride, (1,3-dimesitylimidazolin-2-ylidene) (tricyclohexylphosphine)benzylidene ruthenium dichloride, (1,3-dimesitylimidazolidin-2-ylidene) (tricyclohexylphosphine)benzylidene ruthenium dichloride, bis(tricyclohexylphosphine)ethoxymethylidene ruthenium dichloride, (1,3-dimesitylimidazolidin-2-ylidene) (tricyclohexylphosphine)ethoxymethylidene ruthenium dichloride, and the like.

The amount of the ruthenium carbene complex to be used is expressed as a molar ratio of (ruthenium carbene complex : monomer used for ring-opening polymerization), and is in the range of typically 1:500 to 1:2,000,000, preferably 1:700 to 1:1,500,000, more preferably 1:1,000 to 1:1,000,000.

As the ring-opening polymerization catalysts such as a Group VI transition metal compound in the Periodic Table and a ruthenium carbene complex, one kind may be used alone or two or more kinds may be used in combination as a mixture.

In addition, when a monomer containing the monocyclic olefin and the norbornene compound is subjected to ring-opening polymerization, an olefin compound or a diolefin compound may be added to the polymerization reaction system as a molecular weight adjusting agent, if necessary, in order to adjust the molecular weight of the obtained cycloolefin ring-opened copolymer.

The olefin compound is not particularly limited as long as it is an organic compound having an ethylenically unsaturated bond, and examples thereof include $\alpha$-olefins such as 1-butene, 1-pentene, 1-hexene, and 1-octene; styrenes such as styrene and vinyltoluene; halogen-containing vinyl compounds such as allyl chloride; vinyl ethers such as ethyl vinyl ether and i-butyl vinyl ether; silicon-containing vinyl compounds such as allyltrimethoxysilane, allyltriethoxysilane, allyltrichlorosilane, and styryltrimethoxysilane; disubstituted olefins such as 2-butene and 3-hexene; and the like.

Examples of the diolefin compound include non-conjugated diolefins such as 1,4-pentadiene, 1,4-hexadiene, 1,5-hexadiene, 1,6-heptadiene, 2-methyl-1,4-pentadiene, and 2,5-dimethyl-1,5-hexadiene.

The amount of the olefin compound and the diolefin compound to be used as the molecular weight adjusting agent may be appropriately selected depending on the molecular weight of the cycloolefin ring-opened copolymer to be produced, but is usually in the range of 1/100 to 1/100,000, preferably 1/200 to 1/50,000, and more preferably 1/500 to 1/10,000, with respect to the monomer containing the cyclic olefin used in the polymerization, in a molar ratio.

The polymerization reaction may be performed in the absence of a solvent or in a solution, but is preferably performed in a solution. In the case of copolymerization in a solution, the solvent used may be any solvent which is inert during the polymerization reaction and can dissolve compounds used in the copolymerization including the monocyclic olefin, the norbornene compound, and the polymerization catalyst. Preferred are hydrocarbon-based solvents and halogen-containing solvents. Specific examples of the hydrocarbon-based solvents include aromatic hydrocarbons such as benzene, toluene, xylene, and ethylbenzene; aliphatic hydrocarbons such as hexane, n-heptane, and n-octane; alicyclic hydrocarbons such as cyclohexane, cyclopentane, and methylcyclohexane; and the like. Specific examples of the halogen-containing solvents include haloalkanes such as dichloromethane and chloroform; aromatic halogens such as chlorobenzene and dichlorobenzene; and the like. These solvents may be used alone or in combination.

The lower limit of the polymerization temperature is preferably -100°C or higher, more preferably -50°C or higher, still more preferably 0°C or higher, particularly preferably 20°C or higher, although not particularly limited thereto. The upper limit of the polymerization temperature is preferably lower than 120°C, more preferably lower than 100°C, still more preferably lower than 90°C, particularly preferably 80°C or lower, although not particularly limited thereto. Although the polymerization reaction time is also not particularly limited, it is preferably 1 minute to 72 hours, more preferably 10 minutes to 20 hours. By the polymerization reaction, a polymerization solution containing the cycloolefin ring-opened copolymer is obtained. The obtained polymerization solution may be recovered after completion of the polymerization reaction, or may be recovered by continuously withdrawing a constant amount of the polymerization solution while continuously or intermittently adding one or both of the monocyclic olefin and norbornene compound, and the ring-opening polymerization catalyst (continuous polymerization method).

To the cycloolefin ring-opened copolymer obtained by the polymerization reaction may be optionally added an antioxidant such as a phenol-based stabilizer, a phosphorus-based stabilizer, or a sulfur-based stabilizer. The amount of the antioxidant to be added can be determined according to factors such as the type thereof. Additionally, an extender oil may also be added if needed. In the case of obtaining the cycloolefin ring-opened copolymer as a polymerization solution, in order to recover the cycloolefin ring-opened copolymer from the polymerization solution, a known recovery method may be employed, and for example, a method in which a solvent is separated by steam stripping or the like, and then a solid is filtered off, and further dried to obtain a solid cycloolefin ring-opened copolymer can be employed.

<Rubber composition>

A rubber composition according to the present invention comprises the cycloolefin ring-opened copolymer according to the present invention described above, and silica and/or carbon black.

Examples of the silica in the present invention include dry method white carbon, wet method white carbon, colloidal silica, and precipitated silica disclosed in JP-A-62-62838. Among these, preferred is wet white carbon containing hydrous silicic acid as the main component. A carbon-silica dual phase filler comprising carbon black and silica carried on the surface thereof may also be used. These silicas may be used alone or in combination.

The nitrogen-adsorbing specific surface area (measured by the BET method according to ASTM D3037-81) of silica is preferably 50 to 400 $m^2/g$, more preferably 100 to 220 $m^2/g$. Further, the pH of silica is preferably less than pH=7, and more preferably pH=5 to pH=6.9. Within these ranges, the affinity of the ring-opened copolymer with silica becomes particularly good.

When silica is used, it is preferable to further incorporate a silane coupling agent into the rubber composition according to the present invention for the purpose of further improving the affinity between the cycloolefin ring-opened copolymer and silica. Examples of the silane coupling agent include vinyltriethoxysilane, β-(3,4-epoxycyclohexyl)ethyltrimethoxysilane, N-(β-aminoethyl)-γ-aminopropyltrimethoxysilane, bis(3-(triethoxysilyl)propyl)tetrasulfide, and bis(3-(triethoxysilyl)propyl)disulfide; and tetrasulfides described in JP-A-6-248116, such as γ-trimethoxysilylpropyldimethylthiocarbamyl tetrasulfide and γ-trimethoxysilylpropylbenzothiazyl tetrasulfide. Among these, the tetrasulfides are preferable. These silane coupling agents may be used alone or in combination. The amount of the silane coupling agent to be blended is preferably 0.1 to 30 parts by mass, more preferably 1 to 15 parts by mass, with respect to 100 parts by mass of silica.

When silica is used, the amount of silica to be blended is preferably 1 to 150 parts by mass, more preferably 10 to 120 parts by mass, still more preferably 15 to 100 parts by mass, and particularly preferably 20 to 80 parts by mass, with respect to 100 parts by mass of the rubber component in the rubber composition. By setting the blending amount of silica within the above range, a rubber composition which becomes a cross-linked rubber having further excellent bending fatigue resistance, abrasion resistance, wet grip property, and low heat build-up property can be obtained.

Examples of the carbon black in the present invention include furnace black, acetylene black, thermal black, channel black, and graphite. Among these, furnace black is preferable, and examples thereof include SAF, ISAF, ISAF-HS, ISAF-LS, IISAF-HS, HAF, HAF-HS, HAF-LS, FEF, and the like. These carbon blacks may be used alone or in combination.

The nitrogen-adsorbing specific surface area ($N_2SA$) of carbon black is preferably 5 to 200 $m^2/g$, more preferably 70 to 120 $m^2/g$, and the adsorbing amount of dibutyl phthalate (DBP) is preferably 5 to 300 ml/100g, more preferably 80 to 160 ml/100g.

When carbon black is used, the amount of carbon black to be blended is preferably 1 to 150 parts by mass,

more preferably 2 to 120 parts by mass, still more preferably 15 to 100 parts by mass, and particularly preferably 15 to 80 parts by mass, with respect to 100 parts by mass of the rubber component in the rubber composition. By setting the blending amount of carbon black within the above range, a rubber composition which becomes a cross-linked rubber which is further excellent in bending fatigue resistance, abrasion resistance, wet grip property, and low heat build-up property can be obtained.

In addition, when the rubber composition in the present invention contains both silica and carbon black, the total amount of silica and carbon black is preferably 25 to 200 parts by mass, more preferably 30 to 150 parts by mass, with respect to 100 parts by mass of the rubber component in the rubber composition.

The rubber composition according to the present invention may contain, as a rubber component, a rubber other than the cycloolefin ring-opened copolymer described above. Examples of rubbers other than the cycloolefin ring-opened copolymer described above include natural rubber (NR), polyisoprene rubber (IR), emulsion polymerized SBR (styrenebutadiene copolymer rubber), solution polymerized random SBR (5 to 50% by mass of bonded styrene, 1,2-bond content of butadiene moiety being 10 to 80%), high trans SBR (trans bond content of butadiene moiety being 70 to 95%), low cis BR (polybutadiene rubber), high trans BR (trans bond content of butadiene moiety being 70 to 95%), ethylene-propylene-diene rubber (EPDM), styrene-isoprene copolymer rubber, butadiene-isoprene copolymer rubber, emulsion polymerized styrene-acrylonitrile-butadiene copolymer rubber, acrylonitrile-butadiene copolymer rubber, high vinyl SBR-low vinyl SBR block copolymer rubber, polyisoprene-SBR block copolymer rubber, polystyrene-polybutadiene-polystyrene block copolymer, acrylic rubber, epichlorohydrin rubber, fluororubber, silicon rubber, ethylene-propylene rubber, and urethane rubber. Among them, NR, BR, IR, EPDM, SBR are preferred, and SBR is particularly preferably used. Each of these rubbers may be used alone or in combination of two or more thereof. Further, a rubber other than the cycloolefin ring-opened copolymer may be one having a modified group at the end of the polymer.

The content ratio of the cycloolefin ring-opened copolymer in the rubber composition according to the present invention is preferably 10% by mass or more, more preferably 20% by mass or more, particularly preferably 30% by mass or more, and may be 100% by mass or less, and may be 90% by mass or less, based on the total amount of the rubber component. If the ratio is too low, the effect of improving the bending fatigue resistance, abrasion resistance, wet grip property, and low heat build-up property may not be obtained.

The rubber composition according to the present invention, in addition to the above components, according to conventional methods, compounding agents such as cross-linking agents, cross-linking accelerators, cross-linking activators, fillers other than inorganic materials, anti-aging agents, activators, process oils, plasticizers, and lubricants can be blended in necessary amounts, respectively.

Examples of the cross-linking agent include sulfurs such as powdered sulfur, precipitated sulfur, colloidal sulfur, insoluble sulfur, and highly dispersible sulfur; halogenated sulfurs such as sulfur monochloride and sulfur dichloride; organic peroxides such as dicumyl peroxide and ditertiary butyl peroxide; quinone dioximes such as p-quinone dioxime and p,p'-dibenzoylquinone dioxime; organic polyvalent amine compounds such as triethylenetetramine, hexamethylenediamine carbamate, and 4,4'-methylene bis-o-chloroaniline; alkylphenol resins having a methylol group; and the like. Among these, sulfurs are preferred, and powdered sulfur is more preferred. These cross-linking agents are used alone or in combination. The amount of the cross-linking agent to be added is preferably 0.1 to 15 parts by mass, more preferably 0.5 to 5 parts by mass with respect to 100 parts by mass of rubber components in the rubber composition.

Examples of the cross-linking accelerator include sulfenamide-based cross-linking accelerators such as N-cyclohexyl-2-benzothiazolylsulfenamide, N-(tert-butyl)-2-benzothiazolylsulfenamide, N-oxyethylene-2-benzothiazolylsulfenamide, N-oxyethylene-2-benzothiazolylsulfenamide, and N,N'-diisopropyl-2-benzothiazolylsulfenamide; guanidine-based cross-linking accelerators such as 1,3-diphenylguanidine, 1,3-di-ortho-tolylguanidine, and 1-ortho-tolylbiguanidine; thiourea-based cross-linking accelerators such as diethylthiourea; thiazole-based cross-linking accelerators such as 2-mercaptobenzothiazole, dibenzothiazyl disulfide, and zinc 2-mercaptobenzothiazole; thiuram-based cross-linking accelerators such tetramethylthiuram monosulfide and tetramethylthiuram disulfide; dithiocarbamic acid-based cross-linking accelerators such as sodium dimethyldithiocarbamate and zinc diethyldithiocarbamate; xanthogenic acid-based cross-linking accelerators such as sodium isopropyl xanthate zinc isopropyl xanthate, and zinc butyl xanthate; and the like. Among these, those containing sulfenamide-based cross-linking accelerators are preferable, those containing N(-tert-butyl)-2-benzothiazolylsulfenamide are particularly preferable. These cross-linking accelerators are used alone or in combination. The amount of the cross-linking accelerator to be added is preferably 0.1 to 15 parts by mass, more preferably 0.5 to 5 parts by mass with respect to 100 parts by mass of the rubber components in the rubber composition.

As the cross-linking activator, a higher fatty acid such as stearic acid, zinc oxide, or the like can be used. The amount of the cross-linking activator to be added can be appropriately selected. In the case of a higher fatty acid, the amount thereof to be added is preferably 0.05 to 15 parts by mass, more preferably 0.5 to 5 parts by mass with respect to 100 parts by mass of the rubber components in the rubber composition. In the case of zinc oxide, the amount thereof to be added is preferably 0.05 to 10 parts by mass, more preferably 0.5 to 3 parts by mass with respect to 100 parts by mass of the rubber components in the rubber composition.

As the process oil, a mineral oil or a synthetic oil may be used. As the mineral oil, an aroma oil, a naphthenic

oil, a paraffin oil, or the like is typically used. Examples of other compounding agents include activators such as diethylene glycol, polyethylene glycol, and silicone oil; fillers other than inorganic materials such as calcium carbonate, talc, and clay; tackifiers such as a petroleum resin and coumarone resin; waxes; and the like.

The rubber composition according to the present invention can be obtained by kneading the components by an ordinary method. For example, the rubber composition can be obtained by kneading the compounding agents other than the cross-linking agent and the cross-linking accelerator with the rubber components including the cycloolefin ring-opened copolymer, and then by mixing the cross-linking agent and the cross-linking accelerator with the kneaded product. The kneading temperature of the compounding agents other than the cross-linking agent and the cross-linking accelerator with the rubber components including the cycloolefin ring-opened copolymer is preferably 20 to 200°C, more preferably 30 to 180°C, and the kneading time is preferably 30 seconds to 30 minutes. Mixing of the cross-linking agent and the cross-linking accelerator is usually carried out at typically 100°C or lower, preferably to 80°C or lower.

<Cross-linked rubber>

The cross-linked rubber according to the present invention is obtained by cross-linking the above-described rubber composition according to the present invention.

The cross-linked rubber according to the present invention can be produced using the rubber composition according to the present invention, for example, by molding with a molding machine enabling molding into a desired shape such as an extruding machine, an injection molding machine, a compressor and a roll, performing a cross-linking reaction by heating, and fixing the shape as a cross-linked product. In this case, the cross-linking may be performed after performing molding beforehand, or simultaneously with the molding. The molding temperature is typically 10 to 200°C, and preferably 25 to 120°C. The cross-linking temperature is typically 100 to 200°C, preferably 130 to 190°C; the cross-linking time is typically 1 minute to 24 hours, preferably 2 minutes to 12 hours, particularly preferably 3 minutes to 6 hours.

Depending on the shape, the size, and the like thereof, the inside of the cross-linked rubber may not be sufficiently cross-linked even when the surface thereof is cross-linked. To avoid this, the cross-linked rubber may be further heated for secondary cross-linking.

As a heating method, a common method used to cross-link rubber such as press heating, steam heating, oven heating, or hot air heating can be appropriately selected.

The cross-linked rubber according to the present invention thus obtained has excellent tensile strength, elongation properties, and heat aging resistance. Due to these properties, the cross-linked rubber according to the present invention can be used, for example, in the following various applications: materials for tire parts in tires such as cap treads, base treads, carcasses, side walls, and beads; materials for various industrial products such as hoses, belts, mats, antivibration rubber, and others; rebound resilience improvers for resins; resin film buffers; shoe soles; rubber shoes; golf balls; toys; and the like. Additionally, the cross-linked rubber according to the present invention can be suitably used in tire parts such as treads, carcasses, side walls, and beads in various tires such as all-season tires, high-performance tires, and studless tires.

EXAMPLES

Hereinafter, the present invention will be described in more details with reference to Examples, but these Examples should not be construed as limitations to the present invention. In the following description, "parts" are based on mass unless otherwise specified. Tests and evaluations were performed as follows.

<Molecular weight>

A gel permeation chromatography (GPC) system "HLC-8220" (manufactured by Tosoh) was used in which two H-type columns "HZ-M" (manufactured by Tosoh) were connected in series and measurement was performed at a column temperature of 40°C using tetrahydrofuran as a solvent. A differential refractometer "RI-8320" (manufactured by Tosoh) was used as the detector. The weight average molecular weight (Mw) and the number average molecular weight (Mn) of the cycloolefin ring-opened copolymer were measured as a value in terms of polystyrene.

<Ratio of structural unit derived from monocyclic olefin and structural unit derived from norbornene compound>

The proportions of monomers in cycloolefin ring-opened copolymer were determined from $^1$H-NMR spectroscopy.

<Glass transition temperature (Tmg), extrapolated glass transition initiating temperature (Tig), extrapolated glass transition ending temperature (Teg)>

According to JIS K7121, a differential scanning calorimeter (DSC) was used to measure at a temperature rising rate of 10 °C/minute and at every 0.13°C and to determine from the DSC curves obtained.

<Bending fatigue resistance>

The rubber compositions 1 prepared in Examples and Comparative Examples were cross-linked by pressing at 150°C for 25 minutes to prepare cross-linked rubber sheets. The bending fatigue resistance of the cross-linked rubber sheets was evaluated in the bending crack test defined by JIS K6260. The bending crack test was conducted under a room temperature atmosphere. The number of bends required to reach third grade of crack defined in JIS K6260 was measured and tabulated in table. The larger the value of the number of times of bending is, the better the bending fatigue resistance is.

<DIN abrasion test>

The rubber compositions 1 prepared in Examples and Comparative Examples were cross-linked by pressing at 150°C for 25 minutes to prepare cross-linked rubber sheets. The cross-linked rubber sheets were used to perform the DIN abrasion test as defined in JIS K 6264-2:2005 to determine the specific abrasion volume. The smaller the specific abrasion volume, it indicates that excellent abrasion resistance.

<Evaluation of low heat build-up>

The rubber compositions 2 prepared in Examples and Comparative Examples were cross-linked by pressing at 160°C for 20 minutes to prepare cross-linked test pieces, and tan $\delta$ at 60°C was measured using the resulting test piece by a viscoelasticity measuring device (product name "ARES-G2", manufactured by TA Instruments) under the condition of shear strain of 2.5% and frequency of 10Hz.

<Wet grip property>

The rubber compositions 2 prepared in Examples and Comparative Examples were cross-linked by pressing at 160°C for 20 minutes to prepare cross-linked test pieces, and tan $\delta$ at 0°C was measured using the resulting test piece by ARES manufactured by Rheometrics Co., under the condition of dynamical strain of 0.5% and frequency of 10Hz.

<<Comparative Example 1>>

(Production of cycloolefin ring-opened copolymer)

Under a nitrogen atmosphere, to a glass reaction vessel equipped with a stirrer, 300 parts of cyclopentene (CPE) as a monocyclic olefin, 100 parts of dicyclopentadiene (DCPD) as a norbornene compound, 740 parts of toluene and 0.28 parts of 1-hexen were added. To this was added a polymerization catalyst solution in which 0.022 parts of (1,3-dimesitylimidazolidine-2-ylidene) (tricyclohexylphosphine)benzylidene ruthenium dichloride was dissolved in 20 parts of toluene within 10 seconds, and the polymerization reaction was continued for 4 hours at 25°C. After 4 hours of polymerization reaction, the solution in the glass reaction vessel was poured into a large excess of methanol containing 2,6-di-t-butyl-p-cresol (BHT). Then, the precipitated polymer was recovered, washed with methanol, and dried in vacuo at 40°C for 3 days to obtain 270 parts of CPE/DCPD ring-opened copolymer. The obtained CPE/DCPD ring-opened copolymer had a weight-average molecular weight (Mw) of 404,000, a molecular weight distribution (Mw/Mn) of 2.96, and a CPE/DCPD composition ratio of 68/32. The glass transition temperature (Tmg) was -40°C and $\Delta$Tg was 35°C.

(Preparation of rubber composition 1)

100 parts of CPE/DCPD ring-opened copolymer obtained above were masticated using Banbury mixer having a volume of 250ml for 30 seconds. Next, 1 part of stearic acid, 3 parts of zinc oxide, and 50 parts of carbon black (product name "IRB#7", manufactured by CONTINENTAL CARBON Co., Ltd.) were added thereto, and the mixture was kneaded at 110°C for 180 seconds. Then, the remaining compounding agent at the upper portion of the ram was cleaned, and the mixture was further kneaded for 150 seconds, and the kneaded product was discharged from the mixer. Then, the kneaded product was cooled to room temperature, and the kneaded product was kneaded with 1.75 parts of sulfur, and

1 part of N-(tert-butyl)-2-benzothiazolylsulfenamide (product name "Nocceler NS-P" manufactured by Ouchi Shinko Chemical Industry Co., Ltd.) as a cross-linking accelerator using an open roll at 23°C, then a sheet-shaped rubber composition 1 was obtained. Then, the obtained rubber composition 1 was evaluated for bending fatigue resistance and DIN abrasion test according to the above method. The results are shown in Table 1.

(Preparation of rubber composition 2)

100 parts of CPE/DCPD ring-opened copolymer obtained above were masticated using Banbury mixer having a volume of 250ml. Next, 40 parts of silica (product name "Zeosil 1165MP", manufactured by Solvay S.A.), 10 parts of process oil (product name "Alomax T-DAE", manufactured by Nippon Oil Corporation), and 4.8 parts of a silane coupling agent (bis(3-(triethoxysilyl)propyl)tetrasulfide, product name "Si69", manufactured by Degussa AG) were added, and the mixture was kneaded at 110°C as an starting temperature for 1.5 minutes. Next, to the obtained kneaded product, 20 parts of silica (product name "Zeosil 1165MP", manufactured by Solvay S.A.), 3 parts of zinc oxide (Zinc white #1), 2 parts of stearic acid (product name "SA-300", manufactured by ADEKA), and 2 parts of an antiaging agent (N-phenyl-N'-(1,3-dimethylbutyl)-p-phenylenediamine, product name "Noclac 6C", manufactured by Ouchi Shinko Chemical Industry Co., Ltd.) were added, and the mixture was kneaded for 3 minutes to discharge the kneaded product from the Banbury mixer. The temperature of a rubber composition at the end of kneading was 150°C. Then, the kneaded product was cooled to room temperature, kneaded again in Banbury mixer for 3 minutes, and then discharged from the Banbury mixer. Then, the kneaded product was kneaded with 1.6 parts of sulfur, and 2.8 parts of a cross-linking accelerator (mixture of 1.4 parts of cyclohexyl-2-benzothiazolylsulfenamide (product name "Nocceler CZ-G" manufactured by Ouchi Shinko Chemical Industry Co., Ltd.) and 1.4 parts of 1,3-diphenylguanidine (product name "Nocceler D", manufactured by Ouchi Shinko Chemical Industry Co., Ltd.)) using an open roll at 50°C, then a sheet-shaped rubber composition 2 was obtained. Then, the obtained rubber composition 2 was evaluated for low heat build-up and wet grip property according to the above method. The results are shown in Table 1. Note that the values of the low heat build-up and the wet grip property are shown using the test piece of Comparative Example 1 as a reference sample (index 100), and the values of Examples 1 to 4 are shown as an index of Comparative Example 1.

<<Example 1>>

(Production of cycloolefin ring-opened copolymer)

In the same manner as in Comparative Example 1, 60 parts of cyclopentene (CPE), 20 parts of dicyclopentadiene (DCPD), 740 parts of toluene and 0.28 parts of 1-hexen were added to a glass reaction vessel equipped with a stirrer. To this, among a polymerization catalyst solution in which 0.022 parts of (1,3-dimesitylimidazolidine-2-ylidene) (tricyclohexylphosphine)benzylidene ruthenium dichloride was dissolved in 20 parts of toluene, 5 parts thereof were added within 10 seconds to initiate polymerization. After 15 minutes from the start of the polymerization, while adding a mixed liquid of 240 parts of CPE and 80 parts of DCPD over a period of 45 minutes, the remaining polymerization catalyst solution was added every 15 minutes at three times of 5 parts each, and then the polymerization reaction was continued for 3 hours at 25°C, and CPE/DCPD ring-opened copolymer in an amount of 312 parts was obtained in the same manner as in Comparative Example 1. The obtained CPE/DCPD ring-opened copolymer had a weight-average molecular weight (Mw) of 402,000, a molecular weight distribution (Mw/Mn) of 2.55, and a CPE/DCPD composition ratio of 72/28. The glass transition temperature (Tmg) was -48°C and ΔTg was 7°C. The DSC curves used to determine the glass transition temperature (Tmg) and ΔTg are shown in FIG. 1.

(Preparation of rubber compositions 1 and 2)

Rubber compositions 1 and 2 were prepared in the same manner as in Comparative Example 1, and the bending fatigue resistance, DIN abrasion test, low heat build-up, and wet grip property were evaluated. The results are shown in Table 1. The values of the low heat build-up and the wet grip property are represented by an index with the test piece of Comparative Example 1 as a reference sample (index 100), and the smaller the value of the low heat build-up, the better the low heat build-up, and the larger the value of the wet grip property, the better the wet grip property.

<<Example 2>>

(Production of cycloolefin ring-opened copolymer)

In the same manner as in Comparative Example 1, 60 parts of cyclopentene (CPE), 20 parts of dicyclopentadiene (DCPD), 740 parts of toluene and 0.28 parts of 1-hexen were added to a glass reaction vessel equipped with a stirrer.

To this was added a polymerization catalyst solution in which 0.022 parts of (1,3-dimesitylimidazolidine-2-ylidene) (tricyclohexylphosphine)benzylidene ruthenium dichloride was dissolved in 20 parts of toluene within 10 seconds, and the polymerization reaction was initiated. After 15 minutes from the start of the polymerization, a mixed liquid of 240 parts of CPE and 80 parts of DCPD was added over a period of 1 hour, and then the polymerization reaction was continued for 3 hours at 25°C, and CPE/DCPD ring-opened copolymer in an amount of 304 parts was obtained in the same manner as in Comparative Example 1. The obtained CPE/DCPD ring-opened copolymer had a weight-average molecular weight (Mw) of 424,000, a molecular weight distribution (Mw/Mn) of 2.60, and a CPE/DCPD composition ratio of 70/30. The glass transition temperature (Tmg) was -44°C and ΔTg was 8°C.

(Preparation of rubber compositions 1 and 2)

Rubber compositions 1 and 2 were prepared in the same manner as in Comparative Example 1, and the bending fatigue resistance, DIN abrasion test, low heat build-up, and wet grip property were evaluated. The results are shown in Table 1. The values of the low heat build-up and the wet grip property are represented by an index with the test piece of Comparative Example 1 as a reference sample (index 100), and the smaller the value of the low heat build-up, the better the low heat build-up, and the larger the value of the wet grip property, the better the wet grip property.

<<Example 3>>

(Production of cycloolefin ring-opened copolymer)

In the same manner as in Comparative Example 1, 300 parts of cyclopentene (CPE), 100 parts of dicyclopentadiene (DCPD), 740 parts of toluene and 0.28 parts of 1-hexen were added to a glass reaction vessel equipped with a stirrer. To this, a polymerization catalyst solution in which 0.022 parts of (1,3-dimesitylimidazolidine-2-ylidene) (tricyclohexylphosphine)benzylidene ruthenium dichloride was dissolved in 20 parts of toluene was added every 15 minutes in four times of 5 parts each, and then the polymerization reaction was continued for 3 hours at 25°C, and CPE/DCPD ring-opened copolymer in an amount of 315 parts was obtained in the same manner as in Comparative Example 1. The obtained CPE/DCPD ring-opened copolymer had a weight-average molecular weight (Mw) of 411,000, a molecular weight distribution (Mw/Mn) of 2.63, and a CPE/DCPD composition ratio of 71/29. The glass transition temperature (Tmg) was -49°C and ΔTg was 11°C.

(Preparation of rubber compositions 1 and 2)

Rubber compositions 1 and 2 were prepared in the same manner as in Comparative Example 1, and the bending fatigue resistance, DIN abrasion test, low heat build-up, and wet grip property were evaluated. The results are shown in Table 1. The values of the low heat build-up and the wet grip property are represented by an index with the test piece of Comparative Example 1 as a reference sample (index 100), and the smaller the value of the low heat build-up, the better the low heat build-up, and the larger the value of the wet grip property, the better the wet grip property.

<<Example 4>>

(Production of cycloolefin ring-opened copolymer)

In the same manner as in Comparative Example 1, 60 parts of cyclopentene (CPE), 25 parts of 80 wt% dicyclopentadiene (DCPD)/toluene solution, 715 parts of toluene and 0.28 parts of 1-hexen were added to a glass reaction vessel equipped with a stirrer. To this, among a polymerization catalyst solution in which 0.022 parts of (1,3-dimesitylimidazolidine-2-ylidene) (tricyclohexylphosphine)benzylidene ruthenium dichloride was dissolved in 20 parts of toluene, 5 parts thereof were added within 10 seconds to initiate polymerization. After 15 minutes from the start of the polymerization, while separately adding 240 parts of CPE and 100 parts of 80 wt% dicyclopentadiene (DCPD)/toluene solution to the glass reaction vessel without mixing them in advance over a period of 45 minutes, the remaining polymerization catalyst solution was added every 15 minutes at 3 times of 5 parts each, and then the polymerization reaction was continued for 3 hours at 25°C, and CPE/DCPD ring-opened copolymer in an amount of 324 parts was obtained in the same manner as in Comparative Example 1. The obtained CPE/DCPD ring-opened copolymer had a weight-average molecular weight (Mw) of 408,000, a molecular weight distribution (Mw/Mn) of 2.53, and a CPE/DCPD composition ratio of 72/28. The glass transition temperature (Tmg) was -50°C and ΔTg was 9°C.

(Preparation of rubber compositions 1 and 2)

Rubber compositions 1 and 2 were prepared in the same manner as in Comparative Example 1, and the bending fatigue resistance, DIN abrasion test, low heat build-up, and wet grip property were evaluated. The results are shown in Table 1. The values of the low heat build-up and the wet grip property are represented by an index with the test piece of Comparative Example 1 as a reference sample (index 100), and the smaller the value of the low heat build-up, the better the low heat build-up, and the larger the value of the wet grip property, the better the wet grip property.

Table 1

Table 1

| | Cycloolefin ring-opened copolymer | | | | | | Cross-linked rubber | | | |
|---|---|---|---|---|---|---|---|---|---|---|
| | Monocyclic olefin | Norbornene compound | Composition ratio (wt/wt) | Mw | Tmg (° C) | ΔTg(° C) | Bending fatigue resistance (number of times of bending) | Specific abrasion volume ($mm^3$) | Low heat build-up (index) | Wet grip property (index) |
| Example 1 | CPE | DCPD | 72/28 | 402,000 | -48 | 7 | 80,000 | 68 | 95 | 106 |
| Example 2 | CPE | DCPD | 70/30 | 424,000 | -44 | 8 | 70,000 | 68 | 96 | 107 |
| Example 3 | CPE | DCPD | 71/29 | 411,000 | -49 | 11 | 70,000 | 70 | 95 | 105 |
| Example 4 | CPE | DCPD | 72/28 | 408,000 | -50 | 9 | 70,000 | 68 | 95 | 105 |
| Comparative Example 1 | CPE | DCPD | 68/32 | 404,000 | -40 | 35 | 40,000 | 82 | 100 | 100 |

<<Comparative Example 2>>

(Production of cycloolefin ring-opened copolymer)

Under a nitrogen atmosphere, to a glass reaction vessel equipped with a stirrer, 200 parts of cyclopentene (CPE) as a monocyclic olefin, 200 parts of 2-norbornene (NB) as a norbornene compound, 380 parts of toluene and 0.48 parts of 1-hexen were added. Next, 0.024 parts of dichloro-(3-phenyl-1H-indene-1-ylidene)bis(tricyclohexylphosphine)ruthenium dissolved in 20 parts of toluene was added within 10 seconds, and the polymerization reaction was continued at room temperature for 4 hours. After the polymerization reaction, the polymerization was stopped by adding an excess of vinyl ethyl ether.

The polymerization solution was poured into a large excess of methanol containing 2,6-di-t-butyl-p-cresol (BHT), and the precipitated polymer was recovered, washed with methanol, and then dried in vacuo at 50°C for 3 days to obtain 248 parts of a CPE/NB ring-opened copolymer. The obtained CPE/NB ring-opened copolymer had a weight-average molecular weight (Mw) of 271,000, a molecular weight distribution (Mw/Mn) of 2.35, and a CPE/NB composition ratio of 38/62. The glass transition temperature (Tmg) was -25°C and ΔTg was 36°C.

(Preparation of rubber compositions 1 and 2)

Rubber compositions 1 and 2 were prepared in the same manner as in Comparative Example 1, and the bending fatigue resistance, DIN abrasion test, low heat build-up, and wet grip property were evaluated. The results are shown in Table 2. The values of the low heat build-up and the wet grip property are shown using the test piece of Comparative Example 2 as a reference sample (index 100), and the values of Examples 5 and 6 are shown as an index of Comparative Example 2.

<<Example 5>>

(Production of cycloolefin ring-opened copolymer)

In the same manner as in Comparative Example 2, 40 parts of cyclopentene (CPE), 40 parts of 2-norbornene (NB), 380 parts of toluene and 0.48 parts of 1-hexen were added to a glass reaction vessel equipped with a stirrer. To this, 0.024 parts of dichloro-(3-phenyl-1H-indene-1-ylidene)bis(tricyclohexylphosphine)ruthenium which was dissolved in 20 parts of toluene was added within 10 seconds, and the polymerization reaction was initiated. After 15 minutes from the start of the polymerization, a mixed liquid of 160 parts of CPE and 160 parts of NB was added over a period of 1 hour, and then the polymerization reaction was continued for 2 hours at room temperature, and CPE/NB ring-opened copolymer in an amount of 292 parts was obtained in the same manner as in Comparative Example 2. The obtained CPE/NB ring-opened copolymer had a weight-average molecular weight (Mw) of 259,000, a molecular weight distribution (Mw/Mn) of 1.94, and a CPE/NB composition ratio of 39/61. The glass transition temperature (Tmg) was -23°C and ΔTg was 15°C.

(Preparation of rubber compositions 1 and 2)

Rubber compositions 1 and 2 were prepared in the same manner as in Comparative Example 2, and the bending fatigue resistance, DIN abrasion test, low heat build-up, and wet grip property were evaluated. The results are shown in Table 2. The values of the low heat build-up and the wet grip property are shown using the test piece of Comparative Example 2 as a reference sample (index 100).

<<Example 6>>

(Production of cycloolefin ring-opened copolymer)

In the same manner as in Comparative Example 2, 40 parts of cyclopentene (CPE), 40 parts of 2-norbornene (NB), and 380 parts of toluene were added to a glass reaction vessel equipped with a stirrer. To this, 0.024 parts of dichloro-(3-phenyl-1H-indene-1-ylidene)bis(tricyclohexylphosphine)ruthenium which was dissolved in 20 parts of toluene was added within 10 seconds, and the polymerization reaction was initiated. After 15 minutes from the start of the polymerization, a mixed liquid of 160 parts of CPE, 160 parts of NB and 0.48 parts of 1-hexen was added over a period of 1 hour. Then the polymerization reaction was continued for 2 hours at room temperature, and CPE/NB ring-opened copolymer in an amount of 288 parts was obtained in the same manner as in Comparative Example 2. The obtained CPE/NB ring-opened copolymer had a weight-average molecular weight (Mw) of 264,000, a molecular weight distribution

(Mw/Mn) of 1.90, and a CPE/NB composition ratio of 40/60. The glass transition temperature (Tmg) was -29°C and ΔTg was 8°C.

(Preparation of rubber compositions 1 and 2)

Rubber compositions 1 and 2 were prepared in the same manner as in Comparative Example 2, and the bending fatigue resistance, DIN abrasion test, low heat build-up, and wet grip property were evaluated. The results are shown in Table 2. The values of the low heat build-up and the wet grip property are shown using the test piece of Comparative Example 2 as a reference sample (index 100).

Table 2

Table 2

| | Cycloolefin ring-opened copolymer | | | | | | Cross-linked rubber | | | |
|---|---|---|---|---|---|---|---|---|---|---|
| | Monocyclic olefin | Norbornene compound | Composition ratio (wt/wt) | Mw | Tmg (° C) | ΔTg(° C) | Bending fatigue resistance (number of times of bending) | Specific abrasion volume ($mm^3$) | Low heat build-up (index) | Wet grip property (index) |
| Example 5 | CPE | NB | 39/61 | 259,000 | -23 | 15 | 100,000 | 46 | 92 | 110 |
| Example 6 | CPE | NB | 40/60 | 264,000 | -29 | 8 | 120,000 | 42 | 92 | 111 |
| Comparative Example 2 | CPE | NB | 38/62 | 271,000 | -25 | 36 | 60,000 | 68 | 100 | 100 |

<<Comparative Example 3>>

(Production of cycloolefin ring-opened copolymer)

A catalyst solution was obtained by adding 17.4 parts of 1.0% by weight of $WCl_6$/toluene solution and 8.6 parts of 2.5% by weight of diisobutyl aluminum mono(n-hexoxyde)/toluene solution to a glass reaction vessel equipped with a stirrer under a nitrogen atmosphere and mixing them for 15 minutes. Then, under a nitrogen atmosphere, to a pressure-resistant glass reaction vessel with a stirrer, 300 parts of cyclopentene (CPE) as a monocyclic olefin, 100 parts of tetracyclo[6.2.1.1$^{3,6}$.0$^{2,7}$]dodec-4-ene (TCD) as a norbornene compound, 380 parts of toluene and 0.42 parts of 1-hexen were added, and 26 parts of the catalyst solution prepared above was added thereto within 30 seconds to continue the polymerization reaction at 25°C for 6 hours. After the polymerization reaction for 6 hours, an excess of methanol was added to the glass reaction vessel to stop the polymerization, and then the solution in the glass reaction vessel was poured into a large excess of methanol containing 2,6-di-t-butyl-p-cresol (BHT). Then, the precipitated polymer was recovered, washed with methanol, and dried in vacuo at 40°C for 3 days to obtain 296 parts of a CPE/TCD ring-opened copolymer. The obtained CPE/TCD ring-opened copolymer had a weight-average molecular weight (Mw) of 262,000, a molecular weight distribution (Mw/Mn) of 2.34, and a CPE/TCD composition ratio of 72/28.
The glass transition temperature (Tmg) was -22°C and ΔTg was 32°C.

(Preparation of rubber compositions 1 and 2)

Rubber compositions 1 and 2 were prepared in the same manner as in Comparative Example 1, and the bending fatigue resistance, DIN abrasion test, low heat build-up, and wet grip property were evaluated. The results are shown in Table 3. The values of the low heat build-up and the wet grip property are shown using the test piece of Comparative Example 3 as a reference sample (index 100), and the values of Examples 7 and 8 are shown as an index of Comparative Example 3.

<<Example 7>>

(Production of cycloolefin ring-opened copolymer)

Under a nitrogen atmosphere, 382 parts of toluene, 90 parts of cyclopentene (CPE), 30 parts of tetracyclo[6.2.1.1$^{3,6}$.0$^{2,7}$]dodec-4-ene (TCD), 0.42 parts of 1-hexen, and 8.6 parts of 2.5% by weight of diisobutyl aluminum mono(n-hexoxyde)/toluene solution were added to a glass reaction vessel equipped with a stirrer, then 4.4 parts of 1.0% by weight of $WCl_6$/toluene solution was added thereto and the polymerization was initiated. Then, while adding a mixed liquid of 210 parts of CPE and 70 parts of TCD over a period of 1 hour, 1.0% by weight of $WCl_6$/toluene solution was added every 20 minutes at three times of 4.4 parts each. Then, the polymerization reaction was continued for 4 hours at 25°C, and CPE/TCD ring-opened copolymer in an amount of 320 parts was obtained in the same manner as in Comparative Example 3. The obtained CPE/TCD ring-opened copolymer had a weight-average molecular weight (Mw) of 244,000, a molecular weight distribution (Mw/Mn) of 2.13, and a CPE/TCD composition ratio of 73/27. The glass transition temperature (Tmg) was -26°C and ΔTg was 14 °C.

(Preparation of rubber compositions 1 and 2)

Rubber compositions 1 and 2 were prepared in the same manner as in Comparative Example 3, and the bending fatigue resistance, DIN abrasion test, low heat build-up, and wet grip property were evaluated. The results are shown in Table 3. The values of the low heat build-up and the wet grip property are shown using the test piece of Comparative Example 3 as a reference sample (index 100).

<<Example 8>>

(Production of cycloolefin ring-opened copolymer)

Under a nitrogen atmosphere, 382 parts of toluene, 90 parts of cyclopentene (CPE), 30 parts of tetracyclo [6.2.1.1$^{3,6}$.0$^{2,7}$]dodec-4-ene (TCD), and 8.6 parts of 2.5% by weight of diisobutyl aluminum mono (n-hexoxyde)/toluene solution were added to a glass reaction vessel equipped with a stirrer, then 4.4 parts of 1.0% by weight of $WCl_6$/toluene solution was added thereto and the polymerization was initiated. Then, while adding a mixed liquid of 210 parts of CPE, 70 parts of TCD, and 0.42 parts of 1-hexen over a period of 1 hour, 1.0% by weight of $WCl_6$/toluene solution was added every 20 minutes at three times of 4.4 parts each. Then the polymerization reaction was continued for 4 hours at 25°C,

and CPE/TCD ring-opened copolymer in an amount of 328 parts was obtained in the same manner as in Comparative Example 3. The obtained CPE/TCD ring-opened copolymer had a weight-average molecular weight (Mw) of 276,000, a molecular weight distribution (Mw/Mn) of 2.02, and a CPE/TCD composition ratio of 74/26. The glass transition temperature (Tmg) was -31°C and ΔTg was 11°C.

(Preparation of rubber compositions 1 and 2)

Rubber compositions 1 and 2 were prepared in the same manner as in Comparative Example 3, and the bending fatigue resistance, DIN abrasion test, low heat build-up, and wet grip property were evaluated. The results are shown in Table 3. The values of the low heat build-up and the wet grip property are shown using the test piece of Comparative Example 3 as a reference sample (index 100).

Table 3

Table 3

| | Cycloolefin ring-opened copolymer | | | | | | Cross-linked rubber | | | |
|---|---|---|---|---|---|---|---|---|---|---|
| | Monocyclic olefin | Norbornene compound | Composition ratio (wt/wt) | Mw | Tmg (° C) | ΔTg(° C) | Bending fatigue resistance (number of times of bending) | Specific abrasion volume ($mm^3$) | Low heat build-up (index) | Wet grip property (index) |
| Example 7 | CPE | TCD | 73/27 | 244,000 | -26 | 14 | 80,000 | 86 | 91 | 112 |
| Example 8 | CPE | TCD | 74/26 | 276,000 | -31 | 11 | 90,000 | 81 | 90 | 112 |
| Comparative Example 3 | CPE | TCD | 72/28 | 262,000 | -22 | 32 | 50,000 | 98 | 100 | 100 |

## Claims

1. A cycloolefin ring-opened copolymer comprising a structural unit derived from a monocyclic olefin and a structural unit derived from a norbornene compound, wherein
a difference (ΔTg) between an extrapolated glass transition ending temperature (Teg) and an extrapolated glass transition initiating temperature (Tig) obtained according to JIS K7121 is 30°C or less, and
a weight average molecular weight (Mw) is 50,000 to 1,000,000.

2. The cycloolefin ring-opened copolymer according to claim 1, wherein a content ratio of the structural unit derived from the monocyclic olefin is 20 to 90% by mass, and a content ratio of the structural unit derived from the norbornene compound is 10 to 80% by mass with respect to all repeating structural units in the cycloolefin ring-opened copolymer.

3. The cycloolefin ring-opened copolymer according to claim 1 or 2, wherein a glass transition temperature (Tmg) determined according to JIS K7121 is -80°C to 10°C.

4. The cycloolefin ring-opened copolymer according to any one of claims 1 to 3, wherein the norbornene compound is 2-norbornene.

5. A rubber composition comprising the cycloolefin ring-opened copolymer according to any one of claims 1 to 4, and silica and/or carbon black.

6. A cross-linked rubber obtained by cross-linking the rubber composition according to claim 5.

7. A method for production of the cycloolefin ring-opened copolymer according to any one of claims 1 to 4, comprising copolymerizing the monocyclic olefin and the norbornene compound while adding one or both of the monocyclic olefin and norbornene compound, and a ring-opening polymerization catalyst to a polymerization reactor continuously or intermittently.

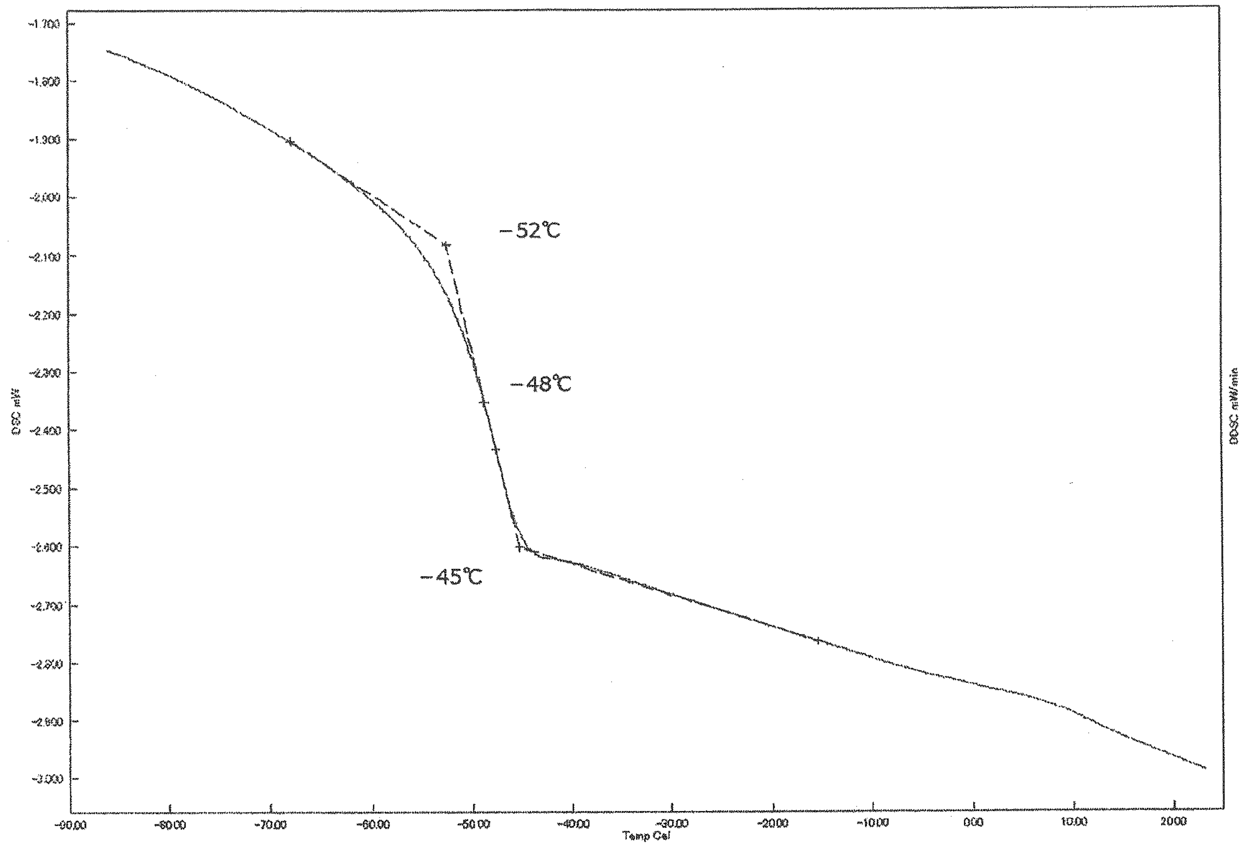


Fig. 1

## INTERNATIONAL SEARCH REPORT

International application No.
PCT/JP2019/024915

A. CLASSIFICATION OF SUBJECT MATTER
Int. Cl. C08G61/08(2006.01)i, C08K3/04(2006.01)i, C08K3/36(2006.01)i, C08L65/00(2006.01)i

According to International Patent Classification (IPC) or to both national classification and IPC

B. FIELDS SEARCHED
Minimum documentation searched (classification system followed by classification symbols)
Int. Cl. C08G61/08, C08K3/04, C08K3/36, C08L65/00

Documentation searched other than minimum documentation to the extent that such documents are included in the fields searched

| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP 54-50599 A (GOODYEAR TIRE & RUBBER CO.) 20 April 1979, claims, page 2, upper left column, line 18 to lower left column, line 13, page 4, lower right column, lines 3-6, page 5, upper left column, lines 7-10, page 5, upper right column, line 3 to lower left column, line 14, page 6, upper right column, line 9 to page 8, upper left column, line 5 & GB 2014588 A, claims, page 1, line 3 to page 7, line 3 & DE 2838302 A1 & FR 2402671 A1 & BE 870221 A & MX 148506 A & NL 7808807 A & BR 7805775 A & CA 1134550 A & IT 1106124 B | 1-3, 5-7<br>4 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 03.09.2019 | 17.09.2019 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2019/024915

C (Continuation). DOCUMENTS CONSIDERED TO BE RELEVANT

| Category* | Citation of document, with indication, where appropriate, of the relevant passages | Relevant to claim No. |
|---|---|---|
| A | JP 6-73168 A (JAPAN SYNTHETIC RUBBER CO., LTD.) 15 March 1994, claims, paragraphs [0012]-[0040] (Family: none) | 1-7 |
| A | JP 2001-114940 A (ZEON CORPORATION) 24 April 2001 & US 6548604 B1 & WO 2001/027199 A1 & EP 1247835 A1 | 1-7 |
| A | WO 2016/060262 A1 (ZEON CORPORATION) 21 April 2016 & US 2017/0233560 A1 & EP 3208304 A1 & KR 10-2017-0073620 A & CN 107108976 A | 1-7 |
| A | JP 2017-179278 A (ZEON CORPORATION) 05 October 2017 (Family: none) | 1-7 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*


### Patent documents cited in the description

- JP 51122187 A
- WO 2014133028 A
- JP 62062838 A
- JP 6248116 A